# EUROPEAN PATENT APPLICATION

(11) **EP 4 734 260 A1**
(43) Date of publication of application: **29.04.2026**
(21) Application number: 25794942.0
(22) Date of filing: 26.03.2025
(51) Int. Cl.: H01M 50/367, H01M 50/342, H01M 50/375, H01M 50/211, H01M 50/249

(54) **BATTERY MODULE, AND BATTERY PACK AND VEHICLE INCLUDING SAME**

(30) Priority: 22.04.2024 KR 20240053175
(71) Applicant: LG Energy Solution, Ltd., Seoul 07335 (KR)
(72) Inventor: CHANG, Hyuk-Kyun, Daejeon 34122 (KR); YUN, Hyun-Seop, Daejeon 34122 (KR)
(74) Representative: Plasseraud IP
(86) International application number: PCT/KR2025/003835
(87) International publication number: WO 2025/225896

(57) **Abstract**

Disclosed is a battery module, which includes a cell stack having a plurality of battery cells; a module case configured to accommodate the cell stack and having a venting hole in a top plate that covers an upper end of the cell stack; and a venting channel formation sheet coupled to the top plate and having a folding portion that is folded at least once at a position corresponding to the venting hole, and the folding portion is provided to be spread over the venting hole by a predetermined pressure to form a gas movement passage in an upper portion of the top plate.

## Description

### TECHNICAL FIELD

The present disclosure relates to a battery module, and a battery pack and a vehicle including the same. More specifically, the present disclosure relates to a battery module capable of suppressing heat transfer between battery cells when a thermal event occurs in the battery module, and a battery pack and a vehicle including the same.

The present application claims priority to Korean Patent Application No. 10-2024-0053175 filed on April 22, 2024 in the Republic of Korea, the disclosures of which are incorporated herein by reference.

### BACKGROUND ART

Secondary batteries, which have high applicability according to product group and electrical characteristics such as high energy density, are widely used not only in portable devices but also in electric vehicles (EVs) or hybrid electric vehicles (HEVs) driven by electric power sources. These secondary batteries are attracting attention as a new energy source for environmental friendliness and energy efficiency enhancement, not only because they may drastically reduce the use of fossil fuels, but also because they do not generate any by-products from energy use.

Types of secondary batteries widely used at present include lithium ion batteries, lithium polymer batteries, nickel cadmium batteries, nickel hydrogen batteries, and nickel zinc batteries. When a high output voltage is required, a plurality of battery cells are connected in series to form a battery module or a battery pack. In addition, a plurality of battery cells are connected in parallel to form a battery module or a battery pack in order to increase the charge/discharge capacity. Therefore, the number of battery cells included in the battery module or pack may be set variously depending on the required output voltage or charge/discharge capacity.

Meanwhile, since battery cells undergo chemical reactions during charging and discharging, their performance may deteriorate if they are used in an environment higher than the appropriate temperature, and if heat control is not possible at the appropriate temperature, there is always a possibility of unexpected ignition or explosion. In addition, the battery module has a structure to accommodate these battery cells intensively inside the module housing. Therefore, if a thermal event occurs in one battery cell, the emitted high-temperature gas or flame may be transferred to adjacent battery cells, causing a chain reaction of battery cell explosions, which is very dangerous.

Therefore, a battery module having a structure capable of suppressing and delaying heat propagation even if a thermal event occurs in some battery cells within a battery module is required to prevent high-temperature gas or flames from being transferred to other battery cells within the battery module and causing thermal runaway.

### DISCLOSURE

### Technical Problem

The present disclosure is designed to solve the problems of the related art, and therefore the present disclosure is directed to providing a battery module that may prevent venting gas, etc. from propagating to other battery cells when a thermal event occurs in a battery cell, and may guide and discharge the venting gas, etc. in a specific direction.

The technical problems that the present disclosure seeks to solve are not limited to the above-mentioned problems, and other problems not mentioned above will be clearly understood by those skilled in the art from the description of the invention described below.

### Technical Solution

In one aspect of the present disclosure, there is provided a battery module comprising: a cell stack having a plurality of battery cells; a module case configured to accommodate the cell stack and having a venting hole in a top plate that covers an upper end of the cell stack; and a venting channel formation sheet coupled to the top plate and having a folding portion that is folded at least once at a position corresponding to the venting hole, wherein the folding portion is provided to be spread over the venting hole by a predetermined pressure to form a gas movement passage in an upper portion of the top plate.

The venting channel formation sheet may be configured to face the cell stack and disposed on a lower surface of the top plate.

The venting channel formation sheet may be made of a material having electrical insulation and fire resistance.

The venting channel formation sheet may include a first fixing portion and a second fixing portion that are fixed to a lower surface of the top plate with the folding portion interposed therebetween.

The first fixing portion and the second fixing portion may be bonded or bolted to the lower surface of the top plate.

The battery module may further comprise a first sheet fixing member connected to the first fixing portion; and a second sheet fixing member connected to the second fixing portion, the first sheet fixing member and the second sheet fixing member protruding downward from the top plate, respectively.

The first sheet fixing member and the second sheet fixing member may have the same structure, and the first sheet fixing member may include a body penetrating the first fixing portion and a support formed at a lower end of the body to support a lower surface of the first fixing portion.

The top plate may have N venting holes spaced apart along a stacking direction of the battery cells.

The venting channel formation sheet may have the folding portion to correspond to the N venting holes in one-to-one relationship.

The battery module may further comprise a flame retardant cover coupled to an upper portion of the module case, and the flame retardant cover may have an opening/closing portion provided in an area corresponding to the venting hole of the top plate to be ruptured or at least partially separated by a predetermined pressure or heat.

The opening/closing portion may be formed by making a notch line or a shredding line in the flame retardant cover.

The module case may include a case body opened in at least an upper surface thereof; and a top plate configured to cover the upper surface of the case body and coupled with the case body.

The battery cells may be pouch-type battery cells, and the pouch-type battery cells may be stacked in one direction.

In another aspect of the present disclosure, there is provided a battery pack comprising the battery module described above.

In still another aspect of the present disclosure, there is provided a vehicle comprising the battery pack described above.

### Advantageous Effects

The battery module according to the present disclosure includes a venting channel formation sheet so that when a thermal event occurs in a battery cell, venting gas, etc. is prevented from propagating to other battery cells and may be guided and discharged in a specific direction.

The effects of the present disclosure are not limited to the above effects, and effects not mentioned herein may be clearly understood by a person having ordinary skill in the art from this specification and the attached drawings.

### DESCRIPTION OF DRAWINGS

FIG. 1 is a perspective view showing a battery module according to an embodiment of the present disclosure.
FIG. 2 is an exploded perspective view showing the battery module of FIG. 1.
FIG. 3 is a diagram showing a lower surface of a top plate to which a venting channel formation sheet is attached according to an embodiment of the present disclosure.
FIG. 4 is a cross-sectional view showing the battery module, taken along A-A' of FIG. 1.
FIG. 5 is a partial enlarged view of FIG. 4.
FIG. 6 is a diagram showing an example in which a folding portion is unfolded when thermal runaway occurs at a battery cell in an outermost region of the battery module of FIG. 4.
FIG. 7 is a perspective view showing a battery module in which a gas movement passage corresponding to FIG. 6 is formed.
FIG. 8 is a diagram showing an example in which the folding portion is unfolded when thermal runaway occurs at the battery cell in the outermost region and the battery cell in the central region in the battery module of FIG. 4.
FIG. 9 is a perspective view showing a battery module in which a gas movement passage corresponding to FIG. 8 is formed.
FIG. 10 is a cross-sectional view showing a portion of a battery module according to another embodiment of the present disclosure.
FIG. 11 is a diagram showing an unfolded state of the folding portion of FIG. 10.
FIG. 12 is a cross-sectional view showing a portion of a battery module according to still another embodiment of the present disclosure.
FIG. 13 is a diagram showing an unfolded state of the folding portion of FIG. 12.
FIG. 14 is a perspective view showing another battery module of the present disclosure.
FIG. 15 is a perspective view showing the battery module of FIG. 14 from which a flame retardant cover is separated.
FIG. 16 is a diagram schematically showing a battery pack according to an embodiment of the present disclosure.
FIG. 17 is a diagram schematically showing a vehicle according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the disclosure, so it should be understood that other equivalents and modifications could be made thereto without departing from the scope of the disclosure.

In addition, when explaining the present disclosure, if it is judged that a detailed description of the relevant notice structure or function may obscure the main point of the present disclosure, such detailed description will be omitted.

Since the embodiments of the present disclosure are provided to more completely explain the present disclosure to those skilled in the art, the shapes and sizes of components in the drawings may be exaggerated, omitted, or schematically illustrated for clearer explanation. Accordingly, the size or ratio of each component does not entirely reflect the actual size or ratio.

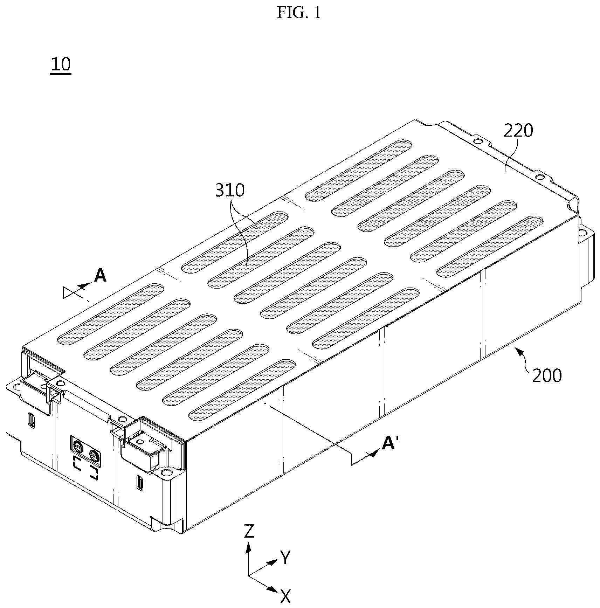

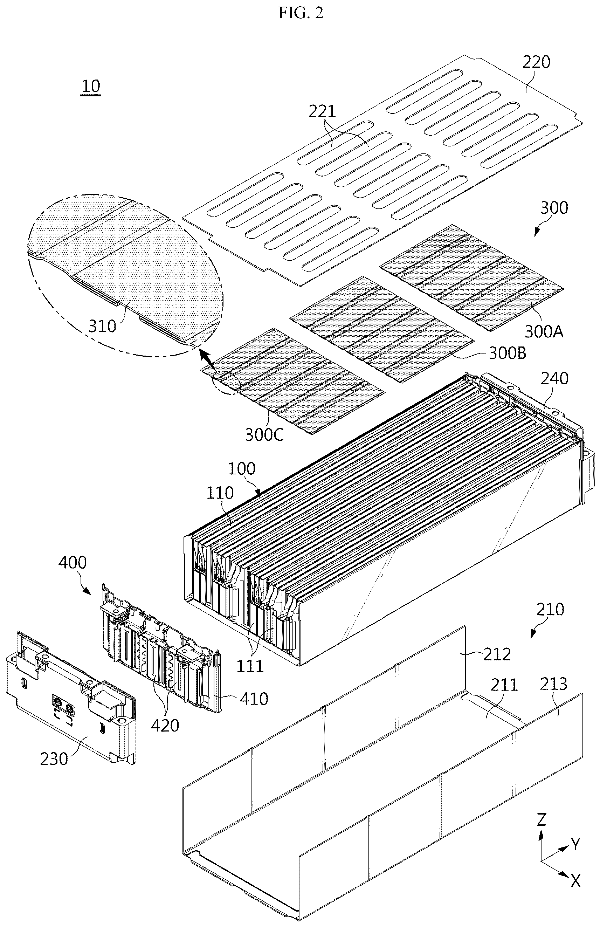

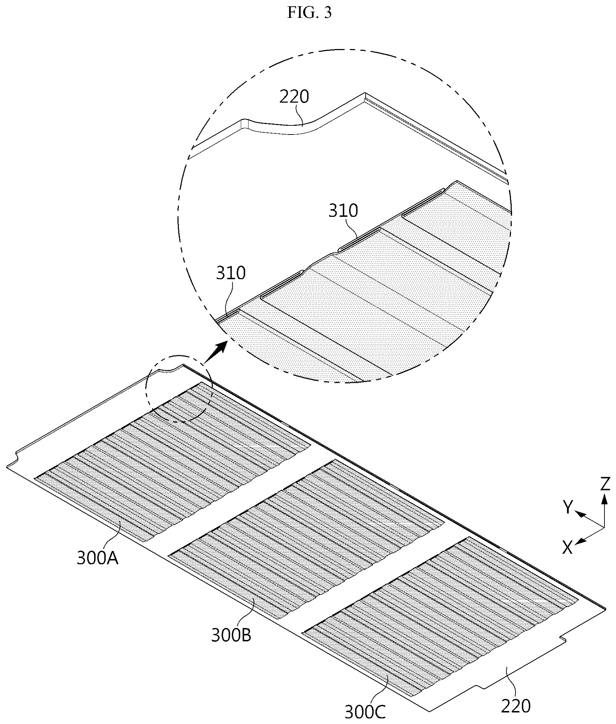

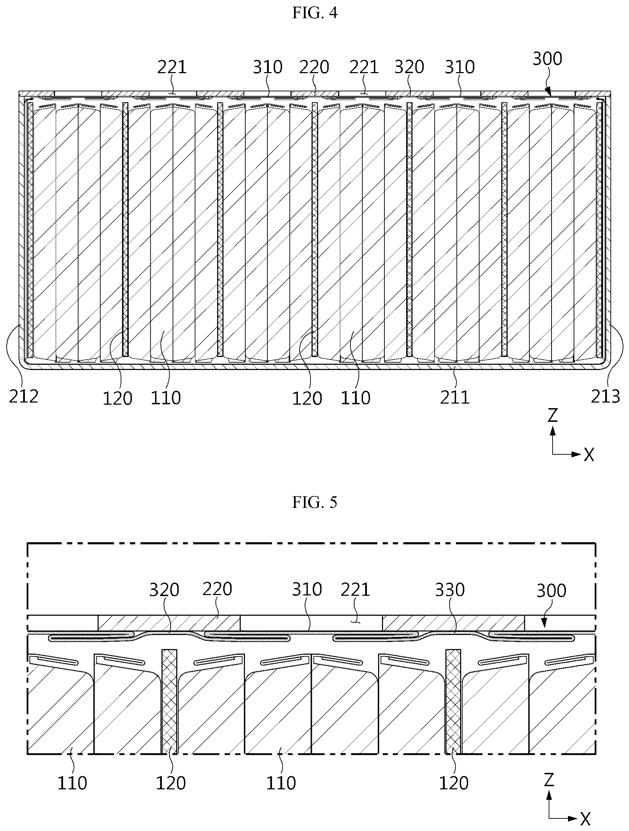

FIG. 1 is a perspective view showing a battery module according to an embodiment of the present disclosure, FIG. 2 is an exploded perspective view showing the battery module of FIG. 1, FIG. 3 is a diagram showing a lower surface of a top plate to which a venting channel formation sheet is attached according to an embodiment of the present disclosure, and FIG. 4 is a cross-sectional view showing the battery module, taken along A-A' of FIG. 1.

Referring to FIGS. 1 to 4, the battery module 10 according to an embodiment of the present disclosure includes a cell stack 100, a module case 200, and a venting channel formation sheet 300.

The cell assembly is a collection of a plurality of battery cells 110. The battery cell 110 may be a pouch-type battery cell 110.

The pouch-type battery cell 110 may include an electrode assembly and a pouch case accommodating the electrode assembly. The pouch case may accommodate the electrode assembly in an accommodation portion, and a periphery around the accommodation portion may be heat-welded to form a sealing portion. The sealing portion may be provided on three side surfaces among four side surfaces of the pouch case.

The pouch-type battery cell 110 may be provided in an upright state so that a side surface that does not include the sealing portion faces downward. As shown in FIG. 2, a plurality of pouch-type battery cells 110 may be arranged in a parallel manner in the right and left direction (X-axis direction) in an upright state in a vertical direction (Z-axis direction). At this time, in each battery cell 110, the sealing portion may be directed in the front and rear direction (Y-axis direction) and the upper direction (+Z-axis direction), and the accommodation portion may be directed in the right and left direction (X-axis direction). If the battery cells 110 are arranged in this manner, it is easy to control the venting direction to one side, and cooling performance may be secured by performing edge cooling through the side that does not include the sealing portion.

In addition, the pouch-type battery cell 110 includes a pair of electrode leads 111 that are connected to the electrode assembly inside the pouch case and drawn to the outside of the pouch case to function as electrode terminals. The pair of electrode leads 111 may be provided in opposite directions in the longitudinal direction (±Y direction) of the pouch-type battery cell 110. If necessary, the pouch-type battery cell 110 may have a form in which two electrode leads 111 are located at one end in the Y-axis direction, for example, only at one end in the +Y-axis direction.

The present disclosure is not limited by a specific type or shape of the battery cell 110, and various battery cells 110 known at the time of filing of this application may be employed. In this embodiment, a pouch-type battery cell 110 having high energy density and allowing easy stacking is targeted as shown in the drawings, but a cylindrical or rectangular secondary battery may also be employed as the battery cell 110.

The cell stack 100 according to this embodiment may include a barrier member 120. The barrier member 120 may be provided in a plate shape having a thinner thickness than the battery cell 110. For example, the barrier member 120 may be provided in a pad shape having excellent heat resistance and/or fire resistance and compressibility. A material such as silicone or aerogel may be employed as the material of the barrier member 120.

The barrier member 120 may be provided in plurality, and the plurality of barrier members 120 may be arranged with a predetermined number of battery cells 110 interposed therebetween along the direction in which the battery cells 110 are arranged. In particular, the barrier member 120 may be configured to partition the battery cells 110 into a predetermined number of battery cells. For example, as shown in FIG. 4, the barrier member 120 may be arranged for every four battery cells 110, so as to group the battery cells 110 into groups of four battery cells.

According to this embodiment of the present disclosure, when thermal runaway occurs at the battery cell 110, the propagation of flame or heat may be blocked by the barrier member 120. In addition, the battery member may contribute to suppressing structural deformation of the module case 200 by absorbing the expansion force of the battery cell 110 when swelling occurs at the battery cell 110.

Meanwhile, referring to FIG. 2, the battery module 10 according to an embodiment of the present disclosure may include a bus bar frame assembly 400. The bus bar frame assembly 400 may include a bus bar frame 410 and a plurality of bus bars 420 and may be arranged at the front and rear sides of the cell stack 100.

The bus bar frame 410 may be injection-molded with an electrically insulating material and may be provided in an approximately plate shape having a size capable of covering the front side (+Y direction) or the rear side (-Y direction) of the cell stack 100. In addition, the bus bar frame 410 may have a plurality of lead slots through which the electrode leads 111 of the battery cells 110 may pass in the front and rear direction. The plurality of lead slots may be provided along the stacking direction of the battery cells 110. In addition, the bus bar frame 410 may be configured so that the plurality of bus bars 420 may be attached to an outer surface thereof.

The plurality of bus bars 420 is a means for connecting the battery cells 110 in series and/or in parallel and may be made of a metal, such as copper, aluminum, nickel, etc. The bus bars 420 may be arranged in the bus bar frame 410 along the same direction as the stacking direction of the battery cells 110. For example, the electrode leads 111 of the battery cells 110 may be extended outward from the bus bar frame 410 through the lead slots and welded to the designated bus bars 420.

The module case 200 is a component for protecting the cell stack 100 from external impacts, etc., and may preferably be made of a material with excellent mechanical strength.

The module case 200 may include a case body 210 and a top plate 220. The case body 210 may be configured such that at least an upper surface thereof is opened. For example, the case body 210 may be configured such that the upper surface, the front surface, and the rear surface are opened. The case body 210 may be provided in a so-called U-frame shape in which a bottom plate 211, a left side plate 212, and a right side plate 213 are formed integrally.

The top plate 220 is configured to cover the upper end of the cell stack 100, and may be provided to be coupled with the case body 210. For example, the top plate 220 may be coupled by welding both longitudinal edge portions to the upper ends of the pair of side plates 212, 213. At this time, the shape in which the top plate 220 and the case body 210 are coupled may be a rectangular tubular shape with the front and rear sides open.

The module case 200 may include end covers 230 and 240 provided on the open front and rear surfaces of the case body 210. The end covers 230 and 240 may be welded and coupled to the case body 210. Meanwhile, although not shown for convenience, the end covers 230 and 240 may have, for example, an inner side made of an insulating material and an outer side made of a metal material. In addition, the end covers 230 and 240 may partially have holes or slits for exposing components that need to be exposed to the outside, such as a positive electrode terminal and a negative electrode terminal or a connector of the battery module 10.

Meanwhile, the top plate 220 may have a venting hole 221 to discharge a venting gas to the outside of the module case 200 when the battery cell 110 ignites.

The top plate 220 may have N venting holes 221 spaced apart from each other along the stacking direction of the battery cells 110. As shown in FIG. 2, the venting holes 221 may be provided at predetermined intervals in the width direction (X direction) of the top plate 220. The venting holes 221 may preferably be provided in the form of elongated holes having a larger diameter in the longitudinal direction of the top plate 220. In addition, the venting holes 221 may be provided at predetermined intervals in the longitudinal direction of the top plate 220.

The top plate 220 may have venting holes 221 arranged roughly in a matrix structure. For example, the top plate 220 of this embodiment may be regarded as having venting holes 221 in a 6 row by 3 column structure. However, it is sufficient that the venting holes 221 according to the present disclosure are configured to be spaced apart in the width direction (X direction) of the top plate 220. That is, the venting holes 221 do not necessarily need to be divided in the longitudinal direction (Y direction) of the top plate 220. In other words, the top plate 220 may have an N row by 1 column structure. As will be explained in detail later, the configuration in which venting holes 221 are provided at predetermined intervals in the width direction of the top plate 220 is to prevent the gas generated from any battery cell 110 inside the module case 200 from propagating to other battery cells 110 inside the module case 200 and to induce the gas to be discharged in the upper direction of the module case 200 via the shortest path.

Referring to FIGS. 2 to 4 again, the venting channel formation sheet 300 may be disposed on the lower surface of the top plate 220 to face the cell stack 100. The venting channel formation sheet 300 may be configured to form a gas movement passage on the upper portion of the top plate 220 when a thermal event occurs at the battery module 10.

The venting channel formation sheet 300 may include a folding portion 310 that is coupled to at least a portion of the top plate 220 and is folded at least once at a position corresponding to the venting hole 221. The folding portion 310 may be configured to unfold over the venting hole 221 by a predetermined pressure to form a gas movement passage in the upper portion of the top plate 220. For example, the folding portion 310, which is located at a position corresponding vertically to a battery cell 110 in which thermal runaway occurs, may unfold by the pressure of the venting gas generated from the battery cell 110 and rise above the venting hole 221 to form a predetermined gas movement passage. At this time, the formed gas movement passage may have a tunnel shape with front and rear sides open so that the venting gas may flow in the front and rear direction (Y direction) of the battery module 10.

The venting channel formation sheet 300 may be made of a material having electrical insulation and fire resistance. For example, the venting channel formation sheet 300 may be made of a material having excellent electrical insulation and fire resistance, such as graphite or silicon. The venting channel formation sheet 300 may normally electrically insulate the battery cells 110 and the top plate 220 from each other.

Specifically, the venting channel formation sheet 300 may include a plurality of unit venting channel formation sheets 300A, 300B, 300C. For example, as in the embodiment of FIG. 2, the venting holes 221 arranged in 6 rows and 3 columns in the top plate 220 may be covered by three unit venting channel formation sheets 300A, 300B, 300C. That is, in FIG. 2, the six venting holes 221 in the first row may be covered by the first unit venting channel formation sheet 300A, the six venting holes 221 in the second row may be covered by the second unit venting channel formation sheet 300B, and the six venting holes 221 in the third row may be covered by the third unit venting channel formation sheet 300C.

The venting channel formation sheet 300 may have folding portions 310 corresponding to the N venting holes 221 in one-to-one relationship. For example, the venting channel formation sheet 300 may have 18 folding portions 310 corresponding to 18 venting holes 221 of the top plate 220 shown in FIG. 2 in one-to-one relationship.

Referring to FIG. 5, the venting channel formation sheet 300 may include a first fixing portion 320 and a second fixing portion 330 that are fixed to a lower surface of the top plate 220 with the folding portion 310 interposed therebetween.

The first fixing portion 320 and the second fixing portion 330 may be configured to be fixed by bonding or bolting to the lower surface of the top plate 220. However, as long as the first fixing portion 320 and the second fixing portion 330 can be fixed to the lower surface of the top plate 220, the attachment method is not limited to bonding or bolting.

If the first fixing portion 320 and the second fixing portion 330 are fixed, when the pressure of the gas acts on the venting channel formation sheet 300 at the time of occurrence of a thermal event, the first fixing portion 320 and the second fixing portion 330 do not flow, and only the folding portion 310 may unfold and protrude to the upper portion of the top plate 220 through the venting hole 221. At this time, a tunnel-shaped gas movement passage having a circumference corresponding to the folded length of the folding portion 310 may be formed on the upper portion of the top plate 220.

For reference, the venting channel formation sheet 300 according to this embodiment has a plurality of venting holes 221 and a plurality of folding portions 310 corresponding thereto in the width direction (X direction) of the top plate 220, and two adjacent folding portions 310 share a fixing portion. The first fixing portion 320 and the second fixing portion 330 are divided fixing portions located on the left and right sides of one folding portion 310. That is, the second fixing portion 330 located on the right side of a certain folding portion 310 may correspond to the first fixing portion 320 with respect to another folding portion 310 adjacent to the right side of the certain folding portion 310.

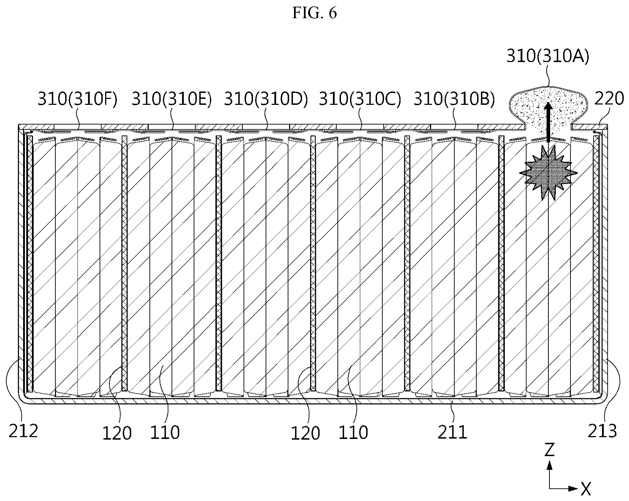

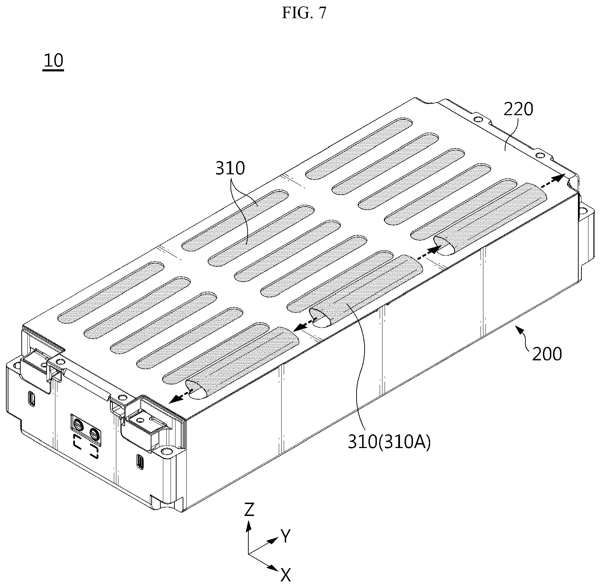

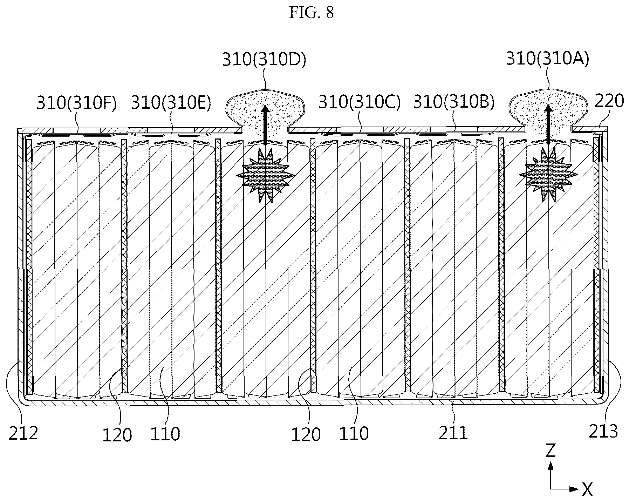

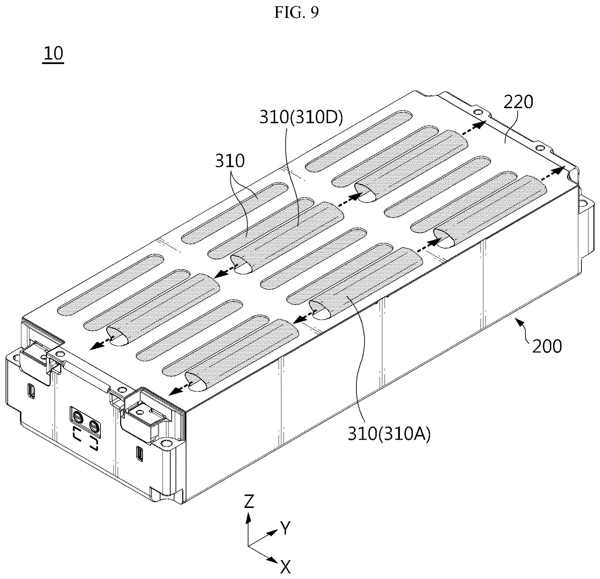

FIG. 6 is a diagram showing an example in which a folding portion 310A is unfolded when thermal runaway occurs at a battery cell 110 in an outermost region of the battery module 10 of FIG. 4, FIG. 7 is a perspective view showing a battery module 10 in which a gas movement passage corresponding to FIG. 6 is formed, FIG. 8 is a diagram showing an example in which the corresponding folding portions 310A, 310D are unfolded when thermal runaway occurs at the battery cell 110 in the outermost region and the battery cell 110 in the central region in the battery module 10 of FIG. 4, and FIG. 9 is a perspective view showing a battery module 10 in which a gas movement passage corresponding to FIG. 8 is formed.

Referring to FIGS. 6 to 9, an example of gas discharge and formation of a directional venting channel when a thermal event occurs in the battery module 10 according to an embodiment of the present disclosure will be briefly described.

As shown in FIG. 6, the battery module 10 according to this embodiment may be configured such that the battery cells 110 may be partitioned into a predetermined number of battery cells by the barrier members 120, and may have venting holes 221 provided in the upper region of the partitioned battery cells 110. For example, when a thermal event occurs in a battery cell 110 in the right outermost region among the battery cells 110, the folding portion 310A, which is folded near the battery cell 110 where the thermal event occurs, unfolds due to the pressure of the discharged material (such as a piece detached from a current collector or electrode active material) or the venting gas and rises above the venting hole 221. Then, a gas movement passage may be formed in the upper portion of the top plate 220 as shown in FIG. 7. At this time, the gas movement passage may have a tunnel shape with front and rear sides open.

According to this configuration, the discharged material or venting gas emitted from the battery cell 110 of the outermost region may be discharged to the upper portion of the top plate 220 through the open venting hole 221 and guided along the gas movement passage in the front and rear direction (Y direction) of the battery module 10. At this time, since the movement of heat in the lateral direction of the top plate 220 is limited, thermal damage to other battery cells 110 may be minimized. In addition, since the internal pressure of the module case 200 is released, the folding portions 310 adjacent to other battery cells 110 where a thermal event does not occur may be maintained in the folded state as they are. That is, as shown in FIG. 7, except for the venting hole 221 located at the outermost side, the remaining venting holes 221 are maintained in a covered state by the folding portions 310B to 310F corresponding thereto, so that the discharged material or venting gas is not introduced from the outside to the inside of the top plate 220.

As another example, as shown in FIG. 8, when a thermal event occurs at the battery cell 110 in the right outermost region and the battery cell 110 in the central region among the battery cells 110, the folding portions 310A, 310D corresponding to the battery cells 110 may unfold, so that isolated gas movement passages may be formed on the upper portion of the top plate 220, as shown in FIG. 9.

According to this configuration, the discharged material and venting gas generated in the battery cells 110 where the thermal event occurs are discharged from the inside of the module case 200 in the upper direction directly to the outside of the module case 200 and do not propagate to other battery cells 110. In addition, except for the venting hole 221 located at the outermost side and the venting hole 221 located in the central region, the remaining venting holes 221 are maintained to be covered by the corresponding folding portions 310B, 310C, 310E, 310F, so that the discharged material and venting gas do not flow back into the inside of the module case 200.

In addition, the discharged material and venting gas may be induced to flow in the front and rear direction of the battery module 10 along the gas movement passage from the outside of the module case 200. In this way, since the flow of the discharged material and venting gas may be controlled in an intended direction when a thermal event occurs, thermal damage to other battery modules 10 arranged in the lateral direction (X direction) in the battery pack may be minimized.

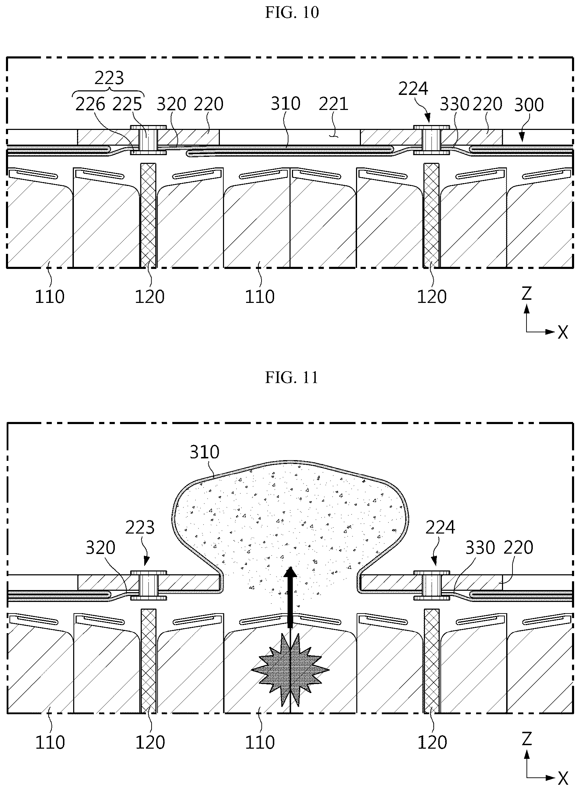

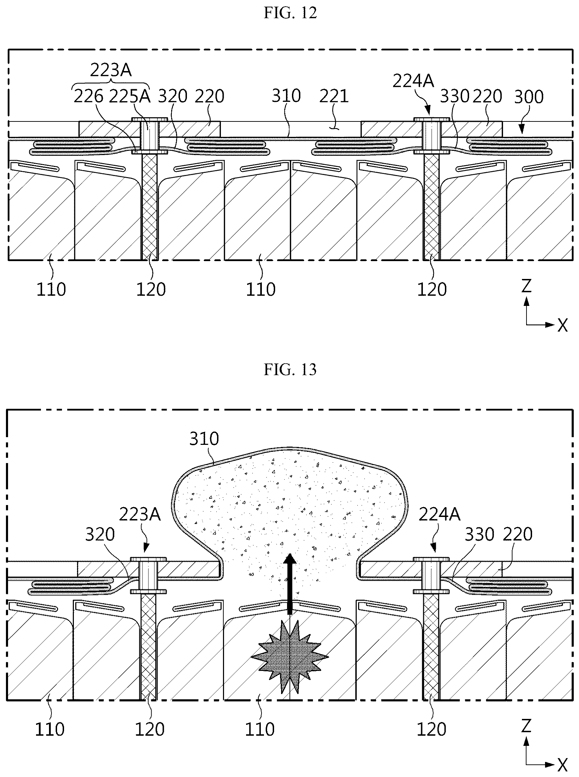

FIG. 10 is a cross-sectional view showing a portion of a battery module 10 according to another embodiment of the present disclosure, FIG. 11 is a diagram showing an unfolded state of the folding portion 310 of FIG. 10, FIG. 12 is a cross-sectional view showing a portion of a battery module 10 according to still another embodiment of the present disclosure, and FIG. 13 is a diagram showing an unfolded state of the folding portion 310 of FIG. 12.

The same reference signs as in the previous drawings represent the same components, which will not be described again, and features different from the former embodiment will be mainly explained.

The embodiment of the present disclosure shown in FIGS. 10 to 13 has a difference in the coupling structure of the top plate 220 and the venting channel formation sheet 300 compared to the former embodiment.

First, as shown in FIG. 10, the battery module 10 according to another embodiment of the present disclosure may include a first sheet fixing member 223 connected to the first fixing portion 320, and a second sheet fixing member 224 connected to the second fixing portion 330, where the first sheet fixing member 223 and the second sheet fixing member 224 protrude downward from the top plate 220. The first sheet fixing member 223 and the second sheet fixing member 224 may have the same structure, and the first sheet fixing member 223 may include a body 225 penetrating the first fixing portion 320 and a support 226 formed at a lower end of the body 225 to support a lower surface of the first fixing portion 320.

The first sheet fixing member 223 and the second sheet fixing member 224 may be a means, such as a rivet, that may mechanically fix the first fixing portion 320 and the second fixing portion 330 to the top plate 220. According to the first sheet fixing member 223 and the second sheet fixing member 224, the fixing force may be further increased than when the first fixing portion 320 and the second fixing portion 330 are bonded to the top plate 220.

According to this embodiment, compared to the former embodiment, as shown in FIG. 11, even if the folding portion 310 is strongly spread by the pressure of the gas, there is less concern that the first fixing portion 320 and the second fixing portion 330 will be detached from the top plate 220, so that the gas movement passage may be maintained more stably.

As shown in FIG. 12, in the battery module 10 according to still another embodiment of the present disclosure, the first sheet fixing member 223A and the second sheet fixing member 224A may have the same structure and may be provided at positions that vertically coincide with the barrier member 120, respectively. In addition, the body 225A may be provided in a form that protrudes downward from the top plate 220 more than in the former embodiment so that the barrier member 120 and the support 226 come into contact. In particular, compared to the embodiment of FIG. 10, according to the embodiment of FIG. 12, the vertical upper portion of the barrier member may be configured so that the left and right sides are blocked by the first sheet fixing member 223A or the second sheet fixing member 224A.

Therefore, according to still another embodiment of the present disclosure, the discharged material and venting gas of the battery cell 110 in which thermal runaway occurs may be more intensively directed toward the venting hole 221 in the upper direction and discharged to the outside. In addition, the heat and gas of the battery cell 110 in which thermal runaway occurs are not easily propagated other adjacent battery cells 110 beyond the barrier member 120 and the first and second sheet fixing members 223A, 224A.

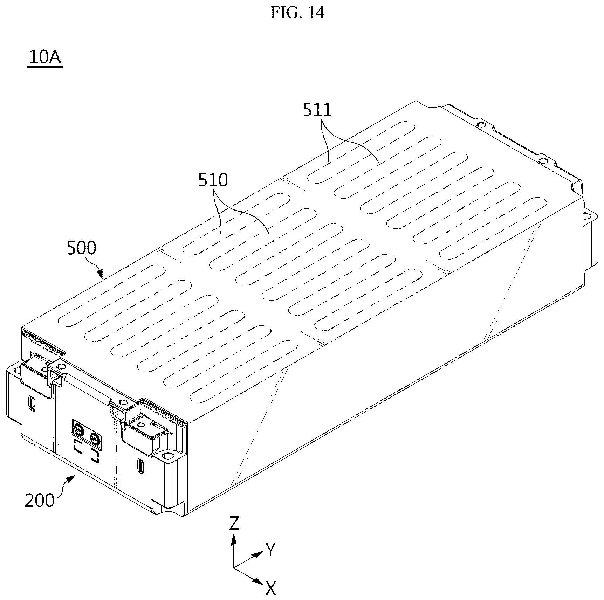

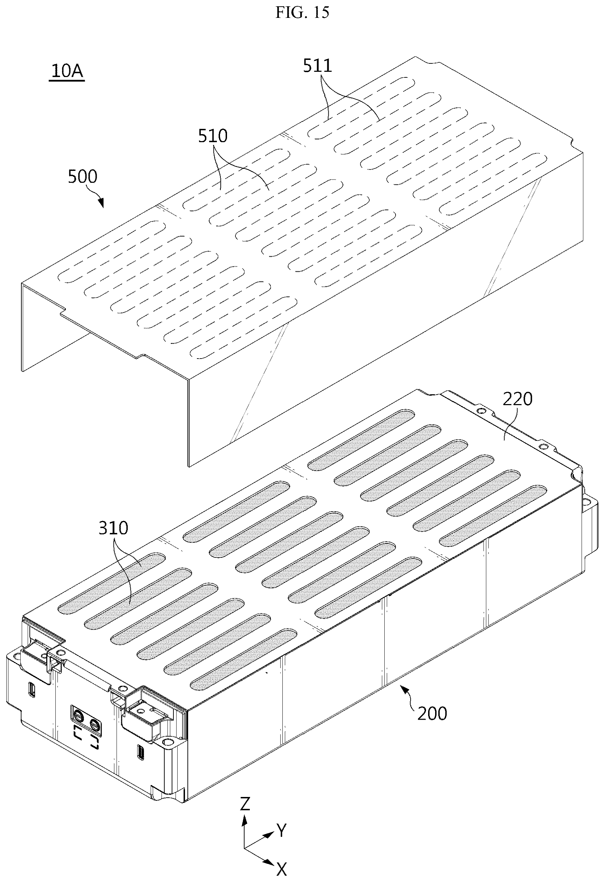

FIG. 14 is a perspective view showing another battery module 10 of the present disclosure, and FIG. 15 is a perspective view showing the battery module 10A of FIG. 14 from which a flame retardant cover 500 is separated.

Referring to FIGS. 14 and 15, the battery module 10A according to still another embodiment of the present disclosure may further include a flame retardant cover 500, compared to the battery module 10 of the former embodiment.

The flame retardant cover 500 may be configured to suppress venting gas or flames, etc. emitted when a thermal event occurs within the battery module 10A, from being transferred to other battery modules 10. To this end, the flame retardant cover 500 may be made of a material having excellent heat-resistant and/or fire-resistant performance, such as a mica sheet or a silicone composite material.

Since this flame retardant cover 500 may maintain morphological stability without deformation even when high temperature heat is generated, it is possible to stably block high temperature gas or flame generated from the battery cell 110.

The flame retardant cover 500 may have an opening/closing portion 510 configured to be ruptured or at least partially separated when a pressure higher than an allowable pressure is applied to an area corresponding to the venting hole 221 of the top plate 220, as in the embodiment shown in FIGS. 14 and 15.

For this purpose, the opening/closing portion 510 may have a form in which a notch line or a shredding line 511 is formed. The opening/closing portion 510 may be ruptured or at least partially separated by the pressure applied when the folding portion 310 is unfolded.

The battery module 10 according to yet another embodiment of the present disclosure has a structure in which, from the top layer, the opening/closing portion 510 of the flame retardant cover 500, the venting hole 221 of the top plate 220, the folding portion 310 of the venting channel formation sheet 300, and the battery cell 110 are arranged in order.

Therefore, according to this embodiment of the present disclosure, when a thermal event occurs in a specific battery cell 110, the folding portion 310 located at the upper portion of the specific battery cell 110 may unfold and rise above the venting hole 221 due to the pressure of the discharged material and gas, and at this time, the opening/closing portion 510 may be ruptured or at least partially separated due to the pressure. Then, as described above, a gas movement passage through which the discharged material and venting gas may move in the front and rear direction of the battery module 10 may be provided on the flame retardant cover 500.

At this time, the flame retardant cover 500 may more reliably block the discharged material or venting gas discharged to the outside of the module case 200 from flowing back into the inside of the module case 200. Therefore, the battery module 10A of the present disclosure including the flame retardant cover 500 may minimize heat transmission to adjacent battery cells 110 or other neighboring battery modules 10As, thereby more effectively preventing or delaying propagation of thermal runaway.

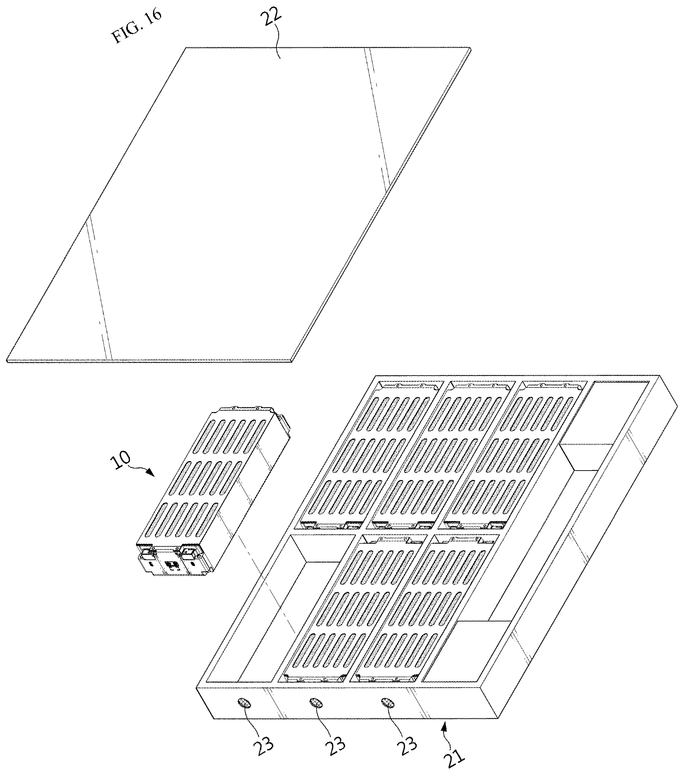

FIG. 16 is a perspective view schematically showing a battery pack 20 including the battery module 10 according to an embodiment of the present disclosure.

Referring to FIG. 16, the battery pack 20 according to an embodiment of the present disclosure may include one or more battery modules 10 according to an embodiment of the present disclosure as described above. The battery pack 20 according to the present disclosure may further include a pack case for accommodating the components described above, along with a BMS (Battery Management System), a current sensor, a fuse, etc. for integrated control of charging and discharging of one or more battery modules 10.

The pack case may include a pack tray 21 capable of dividing and storing the battery modules 10, a pack lid 22 coupled with the pack tray 21 and covering the upper portions of the battery modules 10, and at least one gas discharge hole 23. The gas discharge hole 23 may preferably be provided on one side wall of the pack case located at the front or rear side of the battery modules 10.

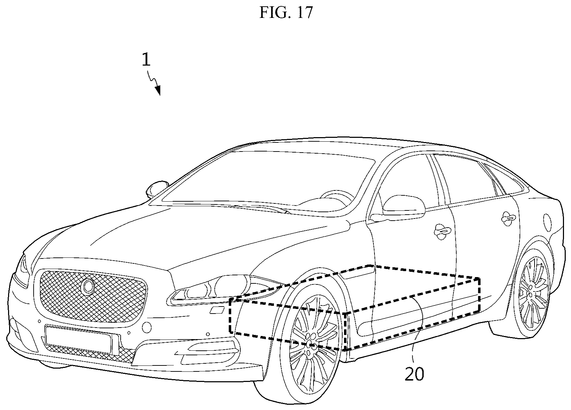

FIG. 17 is a perspective view schematically showing a vehicle including the battery pack 20 according to an embodiment of the present disclosure.

Referring to FIG. 17, the vehicle according to an embodiment of the present disclosure may include one or more battery packs 20 according to an embodiment of the present disclosure or one or more battery modules 10 according to an embodiment of the present disclosure. The vehicle 1 according to the present disclosure may be, for example, an electric vehicle, a hybrid electric vehicle, or a plug-in hybrid vehicle. The vehicle includes a four-wheel vehicle and a two-wheel vehicle. The vehicle operates by receiving power from the battery pack or the battery module 10 according to an embodiment of the present disclosure.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description.

Also, although terms indicating directions such as upward, downward, left, right, front, and rear are used in this specification, it is obvious to those skilled in the art that these terms are only for convenience of explanation and may vary depending on the location of the target object or the location of the observer.

## Claims

1. A battery module comprising:
a cell stack having a plurality of battery cells;
a module case configured to accommodate the cell stack and having a venting hole in a top plate that covers an upper end of the cell stack; and
a venting channel formation sheet coupled to the top plate and having a folding portion that is folded at least once at a position corresponding to the venting hole,
wherein the folding portion is provided to be spread over the venting hole by a predetermined pressure to form a gas movement passage in an upper portion of the top plate.

2. The battery module according to claim 1,
wherein the venting channel formation sheet is configured to face the cell stack and disposed on a lower surface of the top plate.

3. The battery module according to claim 1,
wherein the venting channel formation sheet is made of a material having electrical insulation and fire resistance.

4. The battery module according to claim 1,
wherein the venting channel formation sheet includes a first fixing portion and a second fixing portion that are fixed to a lower surface of the top plate with the folding portion interposed therebetween.

5. The battery module according to claim 4,
wherein the first fixing portion and the second fixing portion are bonded or bolted to the lower surface of the top plate.

6. The battery module according to claim 4, further comprising:
a first sheet fixing member connected to the first fixing portion; and
a second sheet fixing member connected to the second fixing portion,
wherein the first sheet fixing member and the second sheet fixing member protruding downward from the top plate, respectively.

7. The battery module according to claim 6,
wherein the first sheet fixing member and the second sheet fixing member have the same structure, and
wherein the first sheet fixing member includes a body penetrating the first fixing portion and a support formed at a lower end of the body to support a lower surface of the first fixing portion.

8. The battery module according to claim 1,
wherein the top plate has N venting holes spaced apart along a stacking direction of the battery cells.

9. The battery module according to claim 8,
wherein the venting channel formation sheet has the folding portion to correspond to the N venting holes in one-to-one relationship.

10. The battery module according to claim 1, further comprising:
a flame retardant cover coupled to an upper portion of the module case,
wherein the flame retardant cover has an opening/closing portion provided in an area corresponding to the venting hole of the top plate to be ruptured or at least partially separated by a predetermined pressure or heat.

11. The battery module according to claim 10,
wherein the opening/closing portion is formed by making a notch line or a shredding line in the flame retardant cover.

12. The battery module according to claim 1,
wherein the module case includes:
a case body opened in at least an upper surface thereof; and
a top plate configured to cover the upper surface of the case body and coupled with the case body.

13. The battery module according to claim 1,
wherein the battery cells are pouch-type battery cells, and
wherein the pouch-type battery cells are stacked in one direction.

14. A battery pack comprising the battery module according to any one of claims 1 to 13.

15. A vehicle comprising the battery pack according to claim 14.
